(19) Europäisches Patentamt
European Patent Office
Office européen des brevets

(11) Publication number: 0 446 169 A1

(12) EUROPEAN PATENT APPLICATION

(21) Application number: 91810120.5

(22) Date of filing: 22.02.91

(51) Int. Cl.[5]: C08K 13/02, C08K 3/22, C08K 3/32, C08K 5/42, C08K 5/5317, C08K 5/5333, C08K 9/04

(30) Priority: 03.03.90 GB 9004832

(43) Date of publication of application: 11.09.91 Bulletin 91/37

(84) Designated Contracting States: DE FR GB IT NL

(71) Applicant: CIBA-GEIGY AG
Klybeckstrasse 141
CH-4002 Basel (CH)

(72) Inventor: Rideout, Jan, Dr.
6 Salisbury Road
Horwich, Bolton BL6 6LN (GB)
Inventor: Bentley, Robert Leonard, Dr.
34 Eddisbury Avenue
Urmston, Manchester M31 2QJ (GB)

(74) Representative: Sharman, Thomas et al
c/o CIBA-GEIGY PLC Patents Department
Tenax Road Trafford Park
Manchester M17 1WT (GB)

(54) **Flame retardant polymer compositions.**

(57) A polymer composition comprises (A) a halogen-free polymer, (B) as flame retardant, 0.1 to 100 % by weight, based on the weight of the polymer, of at least one metal or metalloid salt of a phosphonic acid of formula I

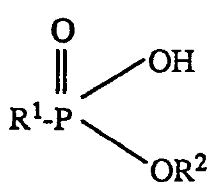

(I)

where $R^1$ represents a straight or branched chain alkyl group having 1 to 3 carbon atoms optionally substituted by one or more halogen atoms or hydroxyl groups; and $R^2$ represents hydrogen or a straight or branched chain alkyl group having 1 to 3 carbon atoms and wherein the metal or metalloid is selected from Groups IIA, IIB, IIIA, IVA and VA of the "Periodic"Chart of Elements (Fisher Scientific Company c 1968), (C) 0.1 to 30 % by weight, based on the weight of the polymer, of titanium dioxide, and (D) 0.1 to 10 % by weight, based on the weight of the polymer, of at least one phosphorus-containing acid or organic sulphur-containing acid.

EP 0 446 169 A1

# FLAME RETARDANT POLYMER COMPOSITIONS

This invention relates to flame retardant polymer compositions containing phosphonic acid salts.

European Patent Publication EP 0245207 describes and claims compositions comprising a halogen-free polymer and, as flame retardant, a metal or metalloid salt of an alkylphosphonic acid or a substituted alkylphosphonic acid. Such compositions, and products such as mouldings made by processing such compositions, generally have good flammability characteristics. It is frequently desired to include titanium dioxide as a pigment in the compositions to give white products. The inclusion of titanium dioxide in amounts conventional for its use as a pigment tend to render the polymer compositions less flame retardant. It has now been found that the deleterious effect caused by the inclusion of titanium dioxide can be obviated by adding to the composition phosphorus-containing acids or sulphur-containing acids.

Accordingly the present invention provides a composition comprising (A) a halogen-free polymer, (B) as flame retardant, 0.1 to 100 % by weight, based on the weight of the polymer, of at least one metal or metalloid salt of a phosphonic acid of formula I

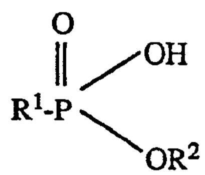

(I)

where $R^1$ represents a straight or branched chain alkyl group having 1 to 3 carbon atoms optionally substituted by one or more halogen atoms or hydroxyl groups; and $R^2$ represents hydrogen or a straight or branched chain alkyl group having 1 to 3 carbon atoms and wherein the metal or metalloid is selected from Groups IIA, IIB, IIIA, IVA and VA of the "Periodic"Chart of Elements (Fisher Scientific Company c 1968), (C) 0.1 to 30 % by weight, based on the weight of the polymer, of titanium dioxide, and (D) 0.1 to 10 % by weight, based on the weight of the polymer, of at least one phosphorus-containing acid or organic sulphur-containing acid.

Where $R^1$ in formula I represents a halogen-substituted alkyl group, the halogen is usually fluorine, chlorine or bromine. Examples of haloalkyl groups $R^1$ are chloromethyl, bromomethyl, trifluoromethyl, dichloromethyl, dibromomethyl, 2-chloroethyl, 1-chloropropyl and 1-bromopropyl. Where $R^1$ represents a hydroxyl-substituted alkyl group, it is usually an alkyl group substituted by one hydroxyl group such as a hydroxymethyl, 2-hydroxyethyl, 2-hydroxypropyl or 3-hydroxypropyl group.

The salt (B) may be a simple ionic compound formed between anions of the phosphonic acid and cations of the metal or metalloid.

Where $R^2$ is H and the metal or metalloid has a valency greater than one, the salt (B) may have a polymeric structure having repeating groups as represented by formula II

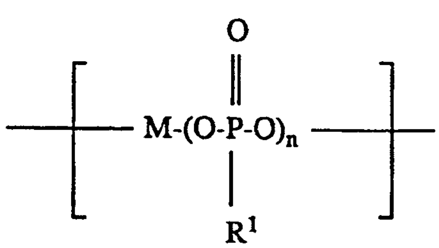

(II)

where $R^1$ is as defined above, M is the metal or metalloid, n has a value one less than the valency of M where each group

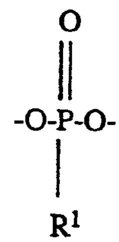

is attached to M atoms only.

Examples of salts of phosphonic acids of formula I and their preparation are given in EP 0245207 and EP 0327496. Mixtures of two or more salts may be used, if desired.

Preferably $R^1$ represents unsubstituted $C_1$-$C_3$ alkyl, especially methyl. $R^2$ preferably represents hydrogen or methyl. The metal or metalloid in the phosphonic acid salt (B) may be, for example, magnesium, calcium, barium, zinc, boron, aluminium, tin or antimony. The metal is preferably magnesium or aluminium, especially aluminium. In particularly preferred compositions, $R^1$ and $R^2$ are each methyl and the metal is aluminium.

The phosphonic acid salt (B) is preferably present in the composition of the invention in an amount of 0.5 to 30 %, especially 2 to 20 %, by weight based on the weight of the polymer (A). The optimum amount used depends on the nature of the polymer and the specific salt(s) used and may be readily determined by simple experiment. The salt may be used in various physical forms depending on the nature of the polymer (A) and the desired properties. For instance, the salt may be ground to a finely divided form to enable better dispersion throughout the polymer.

The titanium dioxide is preferably present in an amount of 1 to 20 %, especially 5 to 15 %, by weight based on the weight of the polymer (A). The particles of the dioxide may have a coating of a white hydrous oxide such as silica or alumina, as in many commercial variants of titanium dioxide supplied for use in polymer compositions, to improve the dispersibility of the dioxide in the polymer. The particles may also have a coating of an organic material; dimethyl siloxane, pentaerythritol and triethanolamine are widely used to coat titanium dioxide for use in polymer compositions. Coating of the titanium dioxide may be effected in a conventional manner, as described in Kirk-Othmer Encyclopedia of Chemical Technology 3rd Edition, Volume 23, pages 148-149 (John Wiley & Sons, 1983).

Acids which may be used as component (D) of the composition of the invention include phosphorus-containing acids such as phosphorous acid; hypophosphorous acid; phosphoric acids such as orthophosphonic acid, phenyl dihydrogen phosphate and diphenyl hydrogen phosphate; polyphosphoric acids; phosphonic acids, including aliphatic phosphonic acids such as alkyl- and hydroxyalkyl- phosphonic acids, e.g. methylphosphonic acid and 1-hydroxyethylidene-1, 1-diphosphonic acid, phosphonocarboxylic acids, e.g. phosphonoacetic acid, 2-phosphonobutane-1,2,4-tricarboxylic acid and alpha-hydroxyphosphonoacetic acid, and alkenylphosphonic acids such as vinylphosphonic acid, cycloaliphatic, aromatic and araliphatic phosphonic acids; phosphinic acids, including aliphatic phosphinic acids such as dimethylphosphinic acid, ethylmethylphosphinic acid and phosphinoacrylic acid or phosphinomethacrylic acid telomers or polymers and aromatic phosphinic acids such as phenylphosphinic acid; sulphonic acids, including aliphatic sulphonic acids such as alkylsulphonic acids and akenylsulphonic acids, e.g. vinylsulphonic acid and copolymers thereof with acrylic acid or methacrylic acid, and aromatic sulphonic acids, including aryl and hydroxyarylsulphonic acids; and sulphinic acids such as benzenesulphinic acid. Amongst the abovementioned types of component (D), phosphoric, phosphonic, phosphinic, sulphonic and sulphinic acids, and mixtures thereof, are preferred.

In more preferred embodiments of the invention, component (D) is an alkylphosphonic acid such as dodecylphosphonic acid or, preferably, a $C_1$ to $C_8$ alkylphosphonic acid such as methylphosphonic acid, ethylphosphonic acid, n-propylphosphonic acid and hexylphosphonic acid; an arylphosphonic acid such as phenylphosphonic acid or naphthylphosphonic acid; an alkylsulphonic acid such as methanesulphonic acid, ethanesulphonic acid or dodecylsulphonic acid; an arylsulphonic acid, particularly a $C_6$ to $C_{12}$ arylsulphonic acid such as benzenesulphonic acid, p-toluenesulphonic acid, xylenesulphonic acids and naphthalene disulphonic acids; or a mixture of two or more of the abovementioned acids. Especially preferred acids for use as component (D) include methylphosphonic acid and benzenesulphonic acid.

Component (D) of the composition is preferably present in an amount of 0.2 to 5 %, especially 0.5 to 2 %, by weight, based on the weight of the polymer (A). It may be mixed with other components of the composition of the invention during formulation thereof. It may alternatively or additionally be included as a coating on particles of the titanium dioxide (C), the particles being coated using, for example, conventional methods for coating titanium dioxide as hereinbefore described. In a specific embodiment, an aqueous solution of (D) is added to a suspension of titanium dioxide in water and, after stirring for 30 minutes to 3 hours, the mixture is dehydrated

to give titanium dioxide particles coated with (D).

Examples of polymers (A) which may be rendered flame retardant are:

1. Polyphenylene oxides and sulfides, and blends of these polymers with styrene graft polymers or styrene copolymers such as high impact polystyrene, EPDM copolymers with rubbers, as well as blends of polyphenylene oxide with polyamides and polyesters.

2. Polyurethanes which are derived from polyethers, polyesters or polybutadienes with terminal hydroxyl groups on the one side and aliphatic, cycloaliphatic or aromatic polyisocyanates on the other side including polyisocyanurates, as well as precursors thereof.

3. Polyamides and copolyamides which are derived from diamines and dicarboxylic acids and/or from aminocarboxylic acids or the corresponding lactams, such as polyamide 4, polyamide 6, polyamide 6/6, polyamide 6/10, polyamide 11, polyamide 12, poly-2,4,4-trimethylhexamethylene terephthalamide or poly-m-phenylene iso-phthalamide, as well as copolymers thereof with polyethers, such as polyethylene glycols, polypropylene glycols or polytetramethylene glycols.

4. Polyesters which are derived from dicarboxylic acids and dihydric alcohols and/or from hydroxycarboxylic acids or the corresponding lactones, such as polyethylene terephthalate, polybutylene terephthalate, poly-1,4-dimethylol-cyclohexane terephthalate and polyhydroxybenzoates as well as block-copoly-ether-esters derived from polyethers having hydroxyl end groups.

5. Unsaturated polyester resins which are derived from copolyesters of saturated and unsaturated dicarboxylic acids with polyhydric alcohols, together with vinyl compounds as cross-linking agents.

6. Polystyrene.

7. Graft copolymers of styrene, such as, for example, styrene on polybutadiene, styrene and acrylonitrile on polybutadiene, styrene and alkyl acrylates or methacrylates on polybutadiene, styrene and acrylonitrile on polyacrylates or polymethacrylates, styrene and acrylonitrile or acrylate/butadiene copolymers, as well as mixtures thereof with random copolymers of styrene or alpha-methylstyrene with dienes or acrylic derivatives, for instance the polymer mixtures known as ABS, MBS, ASA or AES polymers.

8. Epoxide resins such as polyglycidyl ethers of polyhydric alcohols or phenols, preferably of bisphenols, particularly bisphenol A diglycidyl ethers, or cycloaliphatic diepoxides, together with curing agents therefor.

9. Polycarbonates, including homopolycarbonates and copolycarbonates of bisphenols, especially those based on bisphenol A.

10. Blends of styrene polymers 7 as hereinbefore defined, especially ABS polymers, with polycarbonates 9 as hereinbefore described.

Especially useful compositions of the invention include those where the polymer (A) is a polyphenylene oxide, a polyphenylene sulphide or a blend of said oxide or sulphide with a copolymer and/or graft polymer of styrene, particularly a blend of polyphenylene oxide with high-impact polystyrene.

The compositions of the invention may also contain other conventional ingredients, such as heat stabilisers, light stabilisers, ultra-violet light absorbers, anti-oxidants, anti-static agents, preservatives, adhesion promoters, fillers, fibrous reinforcing materials, pigments, lubricants, blowing agents, fungicides, plasticisers, processing aids, other fire-retardant additives and smoke suppressants.

Other fire retardant additives which may be used with the phosphonic acid salts include phosphorus containing esters and salts, for example triaryl phosphates such as triphenyl phosphate and alkylated derivatives thereof, e.g. isopropylated derivatives thereof as described in US 3576923, alkyl aryl phosphates such as 2-ethylhexyl diphenyl phosphate and isodecyl diphenyl phosphate, and ammonium polyphosphate; halogen-containing, especially bromine- and chlorine-containing, compounds such as decabromo diphenyl ether, hexachlorocyclopentadiene, brominated polystyrene, and haloalkyl phosphate and phosphonate esters; and metal compounds such as antimony oxide, hydrated alumina, bismuth oxide, molybdenum oxide, or mixtures of these compounds with zinc and/or magnesium oxide or salts.

The invention is illustrated by the following Examples in which parts and percentages are by weight unless stated otherwise.

The coated titanium dioxide used in Example 3 is prepared as follows:

A solution of methanephosphonic acid (10 parts) in water (100 ml) is added to a suspension of titanium dioxide (RFC-2 Grade of Tioxide Limited) (100 parts) in water (200 ml) with stirring at ambient temperature and the reaction mixture is stirred at this temperature for a futher 2 hours. Concentration of the reaction mass under reduced pressure and subsequent drying of the solid product at 120°C under vacuum, gives 106 parts of solid product having a melting point above 230°C and containing 2.13 % phosphorus.

Examples 1-5: The polymer compositions shown in Table 1 are prepared by melt extruding the pre-mixed ingredients at 270°C using a twin screw compounding extruder. The extrudate is pelletised and injection moulded to give test bars of 1.6 mm thickness which are subjected to the Underwriters Laboratories Subject 94 (UL 94) test procedure for assessing flammability performance.

The results obtained are given in Table 1.

UL 94 classifications of 94V-0, 94V-1 and 94V-2 indicate a decreasing level of flame retardant performance under the test conditions, with the classification FB meaning that the composition "freely burns" i.e. fails to achieve the level of flame retardance required for 94V-2.

Table 1

| | Parts by Weight | | | | |
|---|---|---|---|---|---|
| | Example No. | | | | |
| | 1 | 2 | 3 | 4 | 5 |
| Polyphenylene oxide | 35 | 35 | 35 | 35 | 35 |
| High-impact polystyrene | 65 | 65 | 65 | 65 | 65 |
| Titanium dioxide [(a)] | - | 10 | - | 9 | 10 |
| Coated titanium dioxide [(b)] | - | - | 10 | - | - |
| Aluminium methyl methylphosphonate | 10 | 10 | 10 | 10 | 10 |
| Methanephosphonic acid | - | - | - | 1 | - |
| Benzenesulphonic acid | - | - | - | - | 1 |
| UL 94 Class | 94V-1 | FB | 94V-1 | 94V-1 | 94V-1 |

Notes (a) Grade RFC-2 supplied by Tioxide Limited

(b) Grade RFC-2 coated wth aqueous 10 % methanephosphonic acid

Comparison of Examples 1 and 2 shows that the flame retardance of the composition is diminished by the addition of 10 parts by weight of titanium dioxide. The original flame retardance is restored by the use of coated titanium dioxide as in Example 3 or by the inclusion in the composition of methanephosphonic acid (Example 4) or benzenesulphonic acid (Example 5).

**Claims**

1. A composition comprising (A) a halogen-free polymer, (B) as flame retardant, 0.1 to 100 % by weight, based on the weight of the polymer, of at least one metal or metalloid salt of a phosphonic acid of formula I

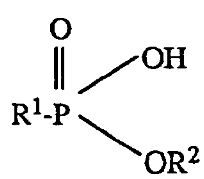

(I)

where $R^1$ represents a straight or branched chain alkyl group having 1 to 3 carbon atoms optionally substituted by one or more halogen atoms or hydroxyl groups; and $R^2$ represents hydrogen or a straight chain or branched alkyl group having 1 to 3 carbon atoms and wherein the metal or metalloid is selected from Groups IIA, IIB, IIIA, IVA and VA of the "Periodic"Chart of Elements (Fisher Scientific Company c 1968), (C) 0. 1 to 30 % by weight, based on the weight of the polymer, of titanium dioxide, and (D) 0.1 to 10 % by

weight, based on the weight of the polymer, of at least one phosphorus-containing acid or organic sulphur-containing acid.

2. A composition according to claim 1, in which $R^1$ represents unsubstituted $C_1$-$C_3$ alkyl.

3. A composition according to claim 2, in which $R^1$ represents methyl.

4. A composition according to claim 1, in which $R^2$ represents hydrogen or methyl.

5. A composition according to claim 1, in which the metal or metalloid in the phosphonic acid salt is magnesium, calcium, barium, zinc, boron, aluminium, tin or antimony.

6. A composition according to claim 1, in which $R^1$ and $R^2$ are each methyl and the metal is aluminium.

7. A composition according to claim 1, in which (D) is a phosphoric, phosphonic, phosphinic, sulphonic or sulphinic acid.

8. A composition according to claim 7, in which (D) is an alkylphosphonic acid, an arylphosphonic acid, an alkylsulphonic acid, an arylsulphonic acid, or a mixture of two or more thereof.

9. A composition according to claim 8, in which (D) is a $C_1$-$C_6$ alkylphosphonic acid or a $C_6$-$C_{12}$ arylsulphonic acid.

10. A composition according to claim 9, in which (D) is methylphosphonic acid or benzenesulphonic acid.

11. A composition according to claim 1, in which (D) is present as a coating on particles of the titanium dioxide.

12. A composition according to claim 1, in which the polymer (A) is a polyphenylene oxide, a polyphenylene sulphide or a blend of said oxide or sulphide with a copolymer and/or graft polymer of styrene.

European Patent Office

# EUROPEAN SEARCH REPORT

Application Number

EP 91 81 0120

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0245207 (CIBA-GEIGY AG) * claims * | 1 | C08K13/02<br>C08K3/22<br>C08K3/32<br>C08K5/42<br>C08K5/5317<br>C08K5/5333<br>C08K9/04 |
| A,D | EP-A-0343109 (CIBA-GEIGY AG) * claims * | 1 | |
| | | | **TECHNICAL FIELDS SEARCHED (Int. Cl.5)** |
| | | | C08K |

The present search report has been drawn up for all claims

| Place of search | Date of completion of the search | Examiner |
|---|---|---|
| THE HAGUE | 19 JUNE 1991 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)